(19) Europäisches Patentamt
European Patent Office
Office européen des brevets

(11) EP 4 238 890 A1

(12) **EUROPEAN PATENT APPLICATION**
published in accordance with Art. 153(4) EPC

(43) Date of publication:
**06.09.2023 Bulletin 2023/36**

(21) Application number: **21886269.6**

(22) Date of filing: **27.10.2021**

(51) International Patent Classification (IPC):
***B65D 65/00*** (2006.01) ***C08F 297/04*** (2006.01)
***C08L 23/10*** (2006.01) ***C08L 53/00*** (2006.01)
***C08J 5/00*** (2006.01) ***F16L 11/06*** (2006.01)

(52) Cooperative Patent Classification (CPC):
**B65D 65/00; C08F 297/04; C08J 5/00; C08L 23/10; C08L 53/00; F16L 11/06**

(86) International application number:
**PCT/JP2021/039663**

(87) International publication number:
**WO 2022/092152 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 JP 2020182724**

(71) Applicant: **Kuraray Co., Ltd.**
**Kurashiki-shi, Okayama 710-0801 (JP)**

(72) Inventor: **TAKAHASHI, Naoto**
**Kamisu-shi**
**Ibaraki 314-0197 (JP)**

(74) Representative: **Müller-Boré & Partner Patentanwälte PartG mbB**
**Friedenheimer Brücke 21**
**80639 München (DE)**

(54) **RESIN COMPOSITION, MOLDED BODY AND TUBE**

(57) The present invention relates to a resin composition comprising a hydrogenated block copolymer (I) and a polypropylene-based resin (II), and a molded body and a tube obtained by using the resin composition. In the resin composition, the hydrogenated block copolymer (I) includes a polymer block (A) and a polymer block (B), the polymer block (B) includes a structural unit derived from a conjugated diene compound, an average of vinyl bond amounts in the whole polymer block (B) included in the resin composition is 50% by mole or more, and a D hardness of a sheet prepared through hot-press molding of the resin composition is less than 50.

EP 4 238 890 A1

## Description

Technical Field

The present invention relates to a resin composition comprising a hydrogenated block copolymer and a polypropylene-based resin, and a molded body and a tube which are obtained by using the resin composition.

Background Art

Among block copolymers and their hydrogenates, which comprise a polymer block containing an aromatic vinyl compound-derived structural unit and a polymer block containing a conjugated diene compound-derived structural unit, some have physical properties such as vibration damping, sound insulation, heat resistance, impact resistance, and adhesiveness, and are used in various applications.

For example, a hydrogenated block copolymer of a styrene-based compound and a conjugated diene compound such as isoprene and butadiene, in which a peak temperature of tan$\delta$ and a vinyl bond amount are specified in order to improve mechanical properties such as vibration damping properties, flexibility, heat resistance, tensile strength, and impact resistance, is disclosed (see, for example, PTLs 1 to 4).

Further, it is known that the hydrogenate of the block copolymer and a polyolefin-based resin are blended to make a resin composition that takes advantage of each characteristic, and that this resin composition can be used for materials of molded bodies such as films or tubes used for medical purposes. (see, e.g., PTLs 5 and 6).

Citation List

Patent Literature

PTL 1: JP 2002-284830 A
PTL 2: WO 2000/015680 A1
PTL 3: JP 2006-117879 A
PTL 4: JP 2010-053319 A
PTL 5: WO 2010/104068 A1
PTL 6: WO 2016/002764 A1


Summary of Invention

Technical Problem

In PTLs 5 and 6, in relation to molded bodies such as tubes, improvements in physical properties such as transparency, flexibility, and kink resistance have been examined. However, it is desired to further improve the physical properties in the molded bodies such as tubes. Especially, in medical applications, the resin composition is required to have an excellent kink resistance, by which it is possible to prevent the crushing of a tube and the occurrence of stagnation of liquid-flowing when the tube is bent during handling in use, such as attachment of the tube to a liquid transfer pump, and to have a moldability by which physical properties of the tube, such as smoothness (no surface roughness) and transparency, are more excellent.

Therefore, the present invention provides a resin composition that is excellent in moldability and is capable of providing a tube that is excellent in kink resistance; and a molded body and a tube obtained by using the resin composition.

Solution to Problem

The present inventor has found that the above problems can be solved by a resin composition comprising a specific hydrogenated block copolymer, and a polypropylene-based resin, in which the vinyl bond amount in the resin composition, and the hardness for the resin composition are set within specific ranges.

That is, the present invention is as follows.

[1] A resin composition comprising a hydrogenated block copolymer (I) and a polypropylene-based resin (II),

wherein the hydrogenated block copolymer (I) includes a polymer block (A) and a polymer block (B), and the polymer block (B) includes a structural unit derived from a conjugated diene compound,
an average of vinyl bond amounts in the whole polymer block (B) included in the resin composition is 50% by mole or more, and
a D hardness is less than 50 as measured by using a type D durometer in accordance with JIS K 6253-3 (2012) on a sheet produced from the resin composition through hot-press molding.

[2] A molded body and a tube obtained by using the resin composition.

Advantageous Effects of Invention

According to the present invention, it is possible to provide a resin composition that is excellent in moldability and is capable of providing a tube that is excellent in kink resistance; and a molded body and a tube obtained by using the resin composition.

Brief Description of Drawings

Fig. 1 is a schematic view for explaining a kink resistance test in Examples.

Description of Embodiments

Hereinafter, descriptions will be made on the basis of an example of an embodiment of the present invention (hereinafter, also referred to as "the present embodiment"). Meanwhile, the embodiment illustrated below is an example for embodying the technical idea of the present invention, and the present invention is not limited to the following descriptions.
Further, in this specification, preferred modes of the embodiment are illustrated, but a combination of two or more individual preferred modes is also a preferred mode. In relation to an item indicated by a numerical range, when there are several numerical ranges, lower limit values and upper limit values thereof can be selectively combined to make preferred modes.
Further, in this specification, when there is a description of a numerical range of "XX to YY", it means "XX or more and YY or less".

[Resin composition]

A resin composition in the present embodiment contains a hydrogenated block copolymer (I) and a polypropylene-based resin (II).

<<Hydrogenated block copolymer (I)>>

The hydrogenated block copolymer (I) is a hydrogenate obtained by hydrogenating a block copolymer including a polymer block (A) and a polymer block (B) .

[Polymer Block (A)]

From the viewpoint of mechanical properties, it is preferable that the polymer block (A) has a structural unit derived from an aromatic vinyl compound used as a monomer.
The polymer block (A) preferably contains a structural unit derived from an aromatic vinyl compound (hereinafter sometimes abbreviated as an "aromatic vinyl compound unit") in an amount of more than 70% by mole in the polymer block (A), and from the viewpoint of mechanical properties, the amount is more preferably 80% by mole or more, even more preferably 90% by mole or more, even still more preferably 95% by mole or more, and particularly preferably substantially 100% by mole.
Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, a silyl group-substituted styrene derivative, indene, vinylnaphthalene, and N-vinylcarbazole. These aromatic vinyl compounds may be used alone or in combination of two or more kinds thereof. Among those, from the viewpoint of a balance between production cost and physical properties, styrene, α-methylstyrene, p-methylstyrene, and a mixture thereof are preferred, and styrene is more preferred.

The polymer block (A) may contain a structural unit derived from another unsaturated monomer other than the aromatic vinyl compound (hereinafter sometimes simply referred to as "another unsaturated monomer unit") at a ratio of 30% by mole or less in the polymer block (A), but the ratio is preferably less than 20% by mole, more preferably less than 15% by mole, even more preferably less than 10% by mole, even still more preferably less than 5% by mole, and particularly preferably 0% by mole.

Examples of such another unsaturated monomer include at least one selected from the group consisting of butadiene, isoprene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, and 2-methylene tetrahydrofuran.

The bonding mode in a case where the polymer block (A) contains another unsaturated monomer unit is not particularly limited, and may be any of a random form and a tapered form.

The hydrogenated block copolymer (I) may have at least one of the polymer blocks (A). In a case where the hydrogenated block copolymer (I) has two or more polymer blocks (A), these polymer blocks (A) may be the same as or different from each other.

In the present specification, "the polymer blocks differ" means that the polymer blocks differ in at least one of the monomer units constituting the polymer blocks, the weight-average molecular weight, the stereoregularity, and the ratio of respective monomer units and the copolymerization conformation (random, gradient, or block) in a case where the polymer block has a plurality of monomer units.

(Weight average molecular weight of polymer block (A))

The weight average molecular weight per polymer block (A) is preferably 300 to 25,000, more preferably 1,000 to 15,000, further preferably 2,000 to 10,000. When the hydrogenated block copolymer (I) has at least one polymer block (A) having a weight average molecular weight falling within the range, the mechanical strength is further improved, and the moldability is also excellent.

In this specification, the weight average molecular weight is a weight average molecular weight in terms of standard polystyrene, which is determined by gel permeation chromatography (GPC) measurement.

The sum total of weight average molecular weights of the polymer blocks (A) included in the hydrogenated block copolymer (I) is preferably 3,000 or more, more preferably 4,000 or more from the viewpoint of mechanical strength or productivity. Further, the sum total of weight average molecular weights of the polymer blocks (A) is preferably 60,000 or less, more preferably 50,000 or less, further preferably 40,000 or less, still further preferably 25,000 or less from the viewpoint of fluidity and moldability.

When the hydrogenated block copolymer (I) contains two or more polymer blocks (A), the "sum total of weight average molecular weights of the polymer blocks (A)" means the sum total of weight average molecular weights of all of those polymer blocks (A), and when the hydrogenated block copolymer (I) contains only one polymer block (A), it means the weight average molecular weight of the polymer block (A).

(Content of polymer block (A))

The content of the polymer block (A) in the hydrogenated block copolymer (I) can be 40% by mass or less.

From the viewpoint of increasing the fluidity and flexibility for the resin composition, and then suppressing the decrease in the peak top intensity of tanδ to be described below so as to make it easier to impart a better kink resistance, the content of the polymer block (A) in the hydrogenated block copolymer (I) is preferably 25% by mass or less, more preferably 15% by mass or less, further preferably 10% by mass or less.

Further, from the viewpoint of obtaining a more suitable strength for applications of a tube, mechanical properties such as moderate rubber elasticity, and a moldability, the content of the polymer block (A) in the hydrogenated block copolymer (I) is preferably 1% by mass or more, more preferably 3% by mass or more, further preferably 5% by mass or more.

The content of the polymer block (A) in the hydrogenated block copolymer (I) can be obtained through $^1$H-NMR measurement using an unhydrogenated block copolymer, and more specifically, is measured in accordance with the method described in Examples.

<Polymer block (B)>

The polymer block (B) includes a structural unit derived from a conjugated diene compound.

(Conjugated diene compound)

The polymer block (B) constituting the hydrogenated block copolymer (I) has a structural unit derived from a conjugated diene compound (hereinafter, also referred to as a "conjugated diene compound unit") from the viewpoint of increasing the peak top intensity of tanδ to be described below, thereby exhibiting a good kink resistance, and improving the moldability and flexibility.

The content of the conjugated diene compound units in the polymer block (B) is preferably 30% by mole or more. Above all, from the viewpoint of kink resistance and moldability, the content of the conjugated diene compound units in the polymer block (B) is more preferably 50% by mole or more, further preferably 65% by mole or more, still more preferably 80% by mole or more, yet more preferably 90% by mole or more, particularly preferably substantially 100% by mole.

The "conjugated diene compound unit" may be a structural unit derived from one type of conjugated diene compound, or may be a structural unit derived from two or more types of conjugated diene compounds.

Examples of the conjugated diene compound include butadiene, isoprene, hexadiene, 2,3-dimethyl-1,3-butadiene, 2-phenyl-1,3-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, farnesene, and myrcene.

Among them, the polymer block (B) in the hydrogenated block copolymer (I) preferably contains a structural unit derived from at least one type selected from isoprene, butadiene, and farnesene, more preferably contains a structural unit derived from at least one type selected from isoprene and butadiene. Further, from the viewpoint of easily increasing the peak top intensity of tanδ, the polymer block (B) preferably contains a structural unit derived from isoprene. From the above viewpoint, the polymer block (B) can contain, for example, a structural unit derived from isoprene, or a structural unit derived from butadiene and isoprene.

When butadiene and isoprene are used in combination, their ratio [isoprene/butadiene] (mass ratio) is not particularly limited, but is preferably 5/95 to 95/5, more preferably 10/90 to 90/10, further preferably 40/60 to 70/30, particularly preferably 45/55 to 65/35. When expressed as a molar ratio, the ratio [isoprene/butadiene] is preferably 5/95 to 95/5, more preferably 10/90 to 90/10, further preferably 40/60 to 70/30, particularly preferably 50/50 to 60/40.

Further, the hydrogenated block copolymer (I) may have at least one polymer block (B). When the hydrogenated block copolymer (I) has two or more polymer blocks (B), the polymer blocks (B) may be the same or different. When the polymer block (B) has two or more types of structural units, their bonding form may be random, tapered, completely alternating, partially blocky, or blocky, or may take a combination of two or more types of these.

(Hydrogenated block copolymer (I-1))

From the viewpoint of easily exhibiting a good kink resistance by increasing the peak top intensity of tanδ, among the hydrogenated block copolymers (I), it is preferable that at least one type of the hydrogenated block copolymers (I) is a hydrogenated block copolymer (I-1)whose polymer block (B) has a structural unit with a main chain comprising one or more types of alicyclic skeletons (X) represented by the following formula (X), and the content of the alicyclic skeletons (X) is 1% by mole or more in the polymer block (B). Further, from the above viewpoint, all the hydrogenated block copolymers (I) in the resin composition may be hydrogenated block copolymers (I-1).

The polymer block (B) constituting the hydrogenated block copolymer (I-1) has a conjugated diene compound-derived structural unit, the structural unit having a main chain that includes one or more types of alicyclic skeletons (X) represented by the following formula (X) (hereinafter, also abbreviated as an "alicyclic skeleton-containing unit"). Further, the polymer block (B) constituting the hydrogenated block copolymer (I-1) may also contain a conjugated diene compound-derived structural unit that does not contain the alicyclic skeleton (X). The alicyclic skeleton-containing unit is included in the above-described conjugated diene compound unit.

When the hydrogenated block copolymer (I-1) has two or more polymer blocks (B), the polymer blocks (B) may be the same or different.

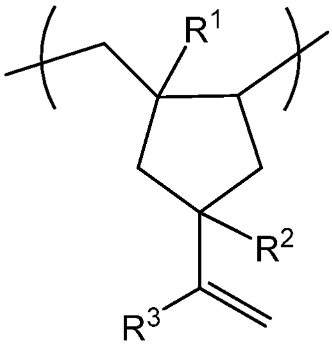

(X)

In the formula (X), $R^1$ to $R^3$ each independently represent a hydrogen atom or a hydrocarbon group having 1 to 11 carbon atoms, and a plurality of each of $R^1$ to $R^3$ may be the same as or different from each other. The hydrocarbon group preferably has 1 to 5 carbon atoms, more preferably has 1 to 3 carbon atoms, and even more preferably has one carbon atom (that is, a methyl group). Further, the hydrocarbon group may be linear or branched, or may be a saturated or unsaturated hydrocarbon group. From the viewpoints of physical properties and formation of the alicyclic skeleton (X), it is particularly preferable that $R^1$ to $R^3$ are each independently the hydrogen atom or the methyl group.

The vinyl group in the formula (X) may be hydrogenated according to the hydrogenation rate. Therefore, the meaning of the alicyclic skeleton (X) in the hydrogenated block copolymer (I-1) includes a skeleton in which the vinyl group in the formula (X) is hydrogenated as well.

The alicyclic skeleton (X) is produced by anionic polymerization of the conjugated diene compound through a method to be described below. Further, depending on the conjugated diene compound(s) to be used, at least one type of alicyclic skeleton (X) is included in the main chain of the alicyclic skeleton-containing unit. When the alicyclic skeleton (X) is incorporated into the main chain of the structural unit included in the polymer block (B), the molecular motion is reduced, and thus, the glass transition temperature is increased, so that the peak top intensity of tanδ around room temperature can be improved.

By way of a specific example, the alicyclic skeleton (X) which is mainly generated in a case where butadiene, isoprene, or a combination of butadiene and isoprene is used as the conjugated diene compound will be described.

When butadiene is used alone as the conjugated diene compound, an alicyclic skeleton (X) having the following combination of substituents (i) may be produced. That is, in this case, the alicyclic skeleton (X) becomes only an alicyclic skeleton in which $R^1$ to $R^3$ are simultaneously hydrogen atoms. Accordingly, in one embodiment, the hydrogenated block copolymer (I-1) having the polymer block (B), in which the main chain contains one type of alicyclic skeleton (X) in which $R^1$ to $R^3$ are simultaneously hydrogen atoms, is exemplified.

Moreover, in a case where isoprene is used alone as the conjugated diene compound, two kinds of alicyclic skeletons (X) having combinations of the following substituents (v) and (vi) are mainly generated.

In addition, in a case where butadiene and isoprene are used in combination as the conjugated diene compounds, six kinds of alicyclic skeletons (X) having combinations of the following substituents (i) to (vi) are mainly generated.

(i): $R^1$ = hydrogen atom, $R^2$ = hydrogen atom, $R^3$ = hydrogen atom
(ii): $R^1$ = hydrogen atom, $R^2$ = methyl group, $R^3$ = hydrogen atom
(iii): $R^1$ = hydrogen atom, $R^2$ = hydrogen atom, $R^3$ = methyl group
(iv): $R^1$ = methyl group, $R^2$ = hydrogen atom, $R^3$ = hydrogen atom
(v): $R^1$ = methyl group, $R^2$ = methyl group, $R^3$ = hydrogen atom
(vi): $R^1$ = methyl group, $R^2$ = hydrogen atom, $R^3$ = methyl group

In the formula (X), from the viewpoint that the molecular motion is further reduced and the peak top intensity of tanδ are further improved by incorporation of a substituent which is a hydrocarbon group, it is preferable that at least one kind of the alicyclic skeleton (X) in the polymer block (B) is an alicyclic skeleton (X') in which at least one of $R^1$ to $R^3$ is a hydrocarbon group having 1 to 11 carbon atoms. Among those, from the viewpoint of a balance between kink resistance and mechanical properties since the alicyclic skeleton can be efficiently generated from the conjugated diene compound, it is more preferable that the hydrocarbon group in the alicyclic skeleton (X') is a methyl group.

In particular, the alicyclic skeleton in which $R^1$ to $R^3$ each independently represent a hydrogen atom or a methyl group, and $R^1$ to $R^3$ are not simultaneously hydrogen atoms is more preferred. That is, it is more preferable that the polymer block (B) has a constituent unit including any one or more kinds of the alicyclic skeletons having the combinations of the substituents (ii) to (vi) in the main chain.

From the viewpoint of kink resistance, in the polymer block (B) in the hydrogenated block copolymer (I-1), the content of the structural units containing the alicyclic skeletons (X) in the main chains is preferably 1% by mole or more, more preferably 1.1% by mole or more, further preferably 1.4% by mole or more, still more preferably 1.8% by mole or more, still more preferably 4% by mole or more, even still more preferably 10% by mole or more. Further, the upper limit of the content of the alicyclic skeletons (X) in the polymer block (B) in the hydrogenated block copolymer (I-1) is not particularly limited within a range where the effects of the present invention are not impaired, but is preferably 40% by mole or less, or may be 30% by mole or less, 20% by mole or less, or 18% by mole or less from the viewpoint of productivity.

From the viewpoint of further improving the kink resistance, in the polymer block (B), the content of the alicyclic skeletons (X') is more preferably 1% by mole or more, further preferably 1.3% by mole or more, still more preferably 1.6% by mole or more. The upper limit value of the content of the alicyclic skeletons (X') is the same as the upper limit value of the content of the alicyclic skeletons (X).

More specifically, in the hydrogenated block copolymer (I-1), when isoprene is used as for the conjugated diene compound, butadiene is used, or butadiene and isoprene are used in combination, for each case, the content of alicyclic skeletons is as follows.

In a case where isoprene is used for the conjugated diene compound, when one or more types of alicyclic skeletons (X') having combinations of the substituents (v) and (vi) are present in the polymer block (B), the total content thereof is preferably 1% by mole or more, more preferably 1.5% by mole or more, further preferably 2% by mole or more, still more preferably 3% by mole or more, particularly preferably 4% by mole or more. Further, when isoprene is used, the upper limit value of the total content is the same as the upper limit value of the content of the alicyclic skeletons (X).

In a case where butadiene is used for the conjugated diene compound, when the alicyclic skeletons (X) are present in the polymer block (B), the content thereof is preferably 3% by mole or more, more preferably 5% by mole or more, further preferably 10% by mole or more. Further, when butadiene is used, the upper limit value of the content is the same as the upper limit value of the content of the alicyclic skeletons (X).

In a case where butadiene and isoprene are used in combination for the conjugated diene compounds, when one or more types of alicyclic skeletons (X') having combinations of the substituents (ii), (iii), (v), and (vi) are present in the polymer block (B), the total content thereof is preferably 1% by mole or more, more preferably 2% by mole or more, further preferably 5% by mole or more, still more preferably 8% by mole or more. When butadiene and isoprene are used in combination, the upper limit value of the total content is the same as the upper limit value of the content of the alicyclic skeletons (X).

Further, in a case where butadiene and isoprene are used in combination for the conjugated diene compounds, when one or more types of alicyclic skeletons (X) having combinations of the substituents (i) to (vi) are present in the polymer block (B), the total content thereof is preferably 1% by mole or more, more preferably 5% by mole or more. When butadiene and isoprene are used in combination, the upper limit value of the total content is the same as the upper limit value of the content of the alicyclic skeletons (X).

The content of the alicyclic skeletons (X) (including (X')) included in the hydrogenated block copolymer (I-1) can be obtained from an integrated value derived from the alicyclic skeletons (X) in the polymer block (B) by $^{13}$C-NMR measurement of an unhydrogenated block copolymer, and more specifically, is measured in accordance with the method described in Examples.

When the hydrogenation rate of the hydrogenated block copolymer (I-1) is 50% by mole or more, any peak derived from a carbon atom on the alicyclic skeleton (X) is hardly observed in $^{13}$C-NMR measurement, but when the substituent $R^3$ is a hydrocarbon group having 1 to 11 carbon atoms, it is possible to observe a peak derived from a carbon atom on the alicyclic skeleton (X) that is bonded to the branched alkyl group having the $R^3$.

Accordingly, it is also possible to specify the content molar ratio of the carbon atom bonded to the branched alkyl group having the $R^3$, on the alicyclic skeleton (X), to the carbon atom bonded to a branched alkyl group, on the main chain.

For example, in the alicyclic skeleton (X) having a combination of the substituents (iii) or (vi), a chemical shift in $^{13}$C-NMR of a carbon atom ((a) in the following formula) bonded to the isoprene group, on the alicyclic skeleton (X), appears around 50.0 to 52.0 ppm, and a chemical shift in $^{13}$C-NMR of the carbon atom ((b) in the following formula) bonded to the isoprene group, on the main chain, appears around 43.0 to 45.0 ppm. Then, when the hydrogenation rate is 40 to 99% by mole, the peak area ratio measured by $^{13}$C-NMR of [a peak area at a chemical shift value of 50.0 to 52.0 ppm]/[a peak area at a chemical shift value of 43.0 to 45.0 ppm] usually falls within a range of 0.01 to 3.00, and from the viewpoint of allowing a better kink resistance to be exhibited, the area ratio preferably falls within a range of 0.01 to 1.50, more preferably within a range of 0.01 to 1.00, further preferably within a range of 0.01 to 0.50, and is still more preferably 0.01 to 0.25.

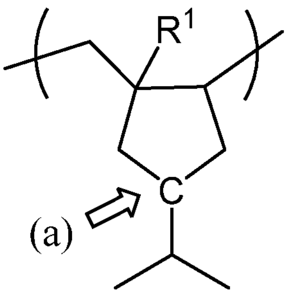
(a)

3,4-bond of isoprene

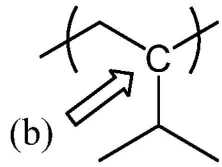
(b)

(Monomers other than conjugated diene compound)

Further, as long as the objects and effects of the present invention are not impaired, the polymer block (B) in the hydrogenated block copolymer (I) may contain structural units derived from other polymerizable monomers than the conjugated diene compound. In this case, in the polymer block (B), the content of structural units derived from other polymerizable monomers than the conjugated diene compound is preferably less than 70% by mole, more preferably less than 50% by mole, further preferably less than 35% by mole, particularly preferably less than 20% by mole. The lower limit value of the content of structural units derived from other polymerizable monomers than the conjugated diene compound is not particularly limited, but the lower limit value may be 0% by mole, 5% by mole, or 10% by mole.

Examples of other polymerizable monomers preferably include at least one type of compound selected from the group consisting of: aromatic vinyl compounds such as styrene, α-methylstyrene, o-methylstyrene, m-methylstyrene, p-methylstyrene, p-t-butylstyrene, 2,4-dimethylstyrene, vinylnaphthalene and vinylanthracene; and methyl methacrylate, methylvinylether, N-vinylcarbazole, β-pinene, 8,9-p-menthene, dipentene, methylenenorbornene, 2-methylenetetrahydrofuran, 1,3-cyclopentadiene, 1,3-cyclohexadiene, 1,3-cycloheptadiene, and 1,3-cyclooctadiene. Among them, styrene, α-methylstyrene, and p-methylstyrene are preferable, and styrene is more preferable.

(Weight average molecular weight of polymer block (B))

The sum total of weight average molecular weights of the polymer blocks (B) included in the hydrogenated block copolymer (I) is not particularly limited, but is preferably 800,000 or less, more preferably 500,000 or less, further preferably 300,000 or less, particularly preferably 200,000 or less in the state prior to hydrogenation from the viewpoint of kink resistance, moldability, etc. Further, the total weight average molecular weight of the polymer blocks (B) has no particular lower limit, and may be 15,000 or more. The "sum total of weight average molecular weights of the polymer blocks (B)" has the same meaning as the above-described "sum total of weight average molecular weights of the polymer blocks (A)".

(Vinyl bond amount)

The conjugated diene compound may take a plurality of bonding modes, which depend on positions of bonds formed during polymerization. For example, in the case of butadiene, a 1,2-bond, and a 1,4-bond may be formed, and in the case of isoprene, a 1,2-bond, a 3,4-bond, and a 1,4-bond may be formed. In the polymer block (B), only one type of these bonding modes may be present, or two or more types may be present.

A vinyl bond amount is the content of 1,2-bond units and 3,4-bond units. The conjugated diene compound has a vinyl group attached to the molecular backbone when a 1,2-bond and a 3,4-bond are formed. When the polymer block (B) is composed of only butadiene, the "content of 1,2-bond units and 3,4-bond units" is changed to the "content of 1,2-bond units" in the application.

The vinyl bond amount can be calculated by $^1$H-NMR measurement in accordance with the method described in Examples.

The vinyl bond amount of the polymer block (B) is preferably 50% by mole or more, more preferably 55% by mole or more, further preferably 60% by mole or more, still more preferably 65% by mole or more, even still more preferably 70% by mole or more. The upper limit of the vinyl bond amount of the polymer block (B) may be 100% by mole.

Further, the vinyl bond amount in the polymer block (B) included in the respective hydrogenated block copolymers (I) in the resin composition is preferably 50 to 100% by mole. For all hydrogenated block copolymers (I), the vinyl bond amount of the polymer blocks (B) within the range can contribute to the expression of even better moldability, transparency and kink resistance.

<Production method of hydrogenated block copolymer (I)>

It is possible to produce the hydrogenated block copolymer (I) by hydrogenating a block copolymer comprising the polymer block (A) and the polymer block (B). Further, here, a method of producing the hydrogenated block copolymer (I-1) will also be described.

(Block copolymer)

In the production method of the block copolymer, for example, one or more types of conjugated diene compounds as monomers are polymerized by an anionic polymerization method so as to form the polymer block (B), and subsequently monomers of the polymer block (A) are added, and then, if necessary, the monomers of the polymer block (A) and the conjugated diene compound are further successively added so that the block copolymer can be obtained.

When the hydrogenated block copolymer (I-1) is produced, as a method for producing the alicyclic skeleton (X) by the anionic polymerization method, a known technique can be used (see e.g., the specification of US Patent No. 3966691). The alicyclic skeleton (X) can be formed at a terminal of the polymer by depletion of monomers, and polymerization can be restarted from the alicyclic skeleton (X) by sequentially adding further monomers thereto. Thus, it is possible to adjust whether to produce the alicyclic skeleton (X) or the content thereof, with time for sequential addition of monomers, a polymerization temperature, the type or addition amount of a catalyst, a combination of monomers and a catalyst or the like.

Further, in the anionic polymerization method, an anionic polymerization initiator, a solvent, and if necessary, a coupling agent and a Lewis base can be used.

Examples of an organic lithium compound which can be used as the polymerization initiator for anionic polymerization in the method include methyllithium, ethyllithium, n-butyllithium, sec-butyllithium, tert-butyllithium, and pentyllithium. Moreover, examples of a dilithium compound which can be used as the polymerization initiator include naphthalene dilithium and dilithiohexylbenzene.

Examples of the coupling agent include dichloromethane, dibromomethane, dichloroethane, dibromoethane, dibromobenzene, phenyl benzoate, γ-glycidoxypropyltriethoxysilane, γ-glycidoxypropyltrimethoxysilane, γ-glycidoxypropylmethyldiethoxysilane, and γ-glycidoxypropylmethyldimethoxysilane.

The amounts of the polymerization initiator and the coupling agent to be used are appropriately determined depending on a desired weight-average molecular weight of the hydrogenated block copolymer (I). Typically, the initiator such as an alkyllithium compound and a dilithium compound is preferably used at a ratio of 0.01 to 0.2 parts by mass with respect to 100 parts by mass of the total of the monomers such as the monomer of the polymer block (A) and the conjugated diene compound used for polymerization, and in a case where the coupling agent is used, the coupling agent is preferably used at a ratio of 0.001 to 0.8 parts by mass with respect to 100 parts by mass of the total of the monomers.

The solvent is not particularly limited as long as it does not adversely affect the anionic polymerization reaction, and examples thereof include aliphatic hydrocarbons such as cyclohexane, methylcyclohexane, n-hexane, and n-pentane; and aromatic hydrocarbons such as benzene, toluene, and xylene. In addition, the polymerization reaction is performed at a temperature of usually 0 to 100°C, preferably 10 to 70°C, for 0.5 to 50 hours, preferably 1 to 30 hours.

Further, it is possible to increase the content of 1,2-bonds and 3,4-bonds in the polymer block (B) or the content of the alicyclic skeleton (X) by a method of adding a Lewis base as a cocatalyst during the polymerization of the conjugated diene compound.

Examples of the Lewis base which can be used include ethers such as dimethyl ether, diethyl ether, tetrahydrofuran, and 2,2-di(2-tetrahydrofuryl)propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; and metal salts such as sodium or potassium salts of aliphatic alcohols, such as sodium t-butyrate, sodium t-amylate, or sodium isopentylate, or sodium or potassium salts of alicyclic alcohol, such as dialkylate sodium cyclohexanolate, for example, sodium mentholate. These Lewis bases can be used alone or in combination of two or more kinds thereof.

The amount of the Lewis base to be added is determined by how much the vinyl bond amount is controlled in the polymer block (B), and how much the content of the alicyclic skeletons (X) is controlled in a case where the polymer block (B) particularly includes a structural unit derived from isoprene and/or butadiene. Thus, the amount of the Lewis base to be added is not limited in a strict sense, but preferred is use within a range of usually 0.1 to 1,000 mol, preferably 1 to 100 mol per gram of the lithium atom contained in the alkyllithium compound or the dilithium compound used as the polymerization initiator.

Further, in the case of the hydrogenated block copolymer (I-1), from the viewpoint of easily forming the alicyclic skeletons (X), and furthermore increasing the content thereof, an average feed rate of the conjugated diene compound (hereinafter, also referred to as an "average diene feed rate") is preferably 150 kg/h or less, more preferably 110 kg/h or less, further preferably 55 kg/h or less, and may be 45 kg/h or less, 30 kg/h or less, or 22 kg/h or less per mol of the

active terminal. From the viewpoint of increasing productivity, the lower limit value is preferably 1 kg/h or more, more preferably 3 kg/h or more, further preferably 5 kg/h or more, and may be 7 kg/h or more, 10 kg/h or more, or 15 kg/h or more per mol of the active terminal.

After performing polymerization according to the above-mentioned method, an active hydrogen compound such as alcohols, carboxylic acids, and water is added to terminate the polymerization reaction, whereby a block copolymer can be obtained.

(Hydrogenate)

In a case where the block copolymer obtained by the production method is formed into a hydrogenate, a hydrogenation reaction is performed in the presence of a hydrogenation catalyst in an inert organic solvent. By the hydrogenation reaction, a carbon-carbon double bond derived from the conjugated diene compound in the polymer block (B) in the block copolymer is hydrogenated, whereby a hydrogenate of the block copolymer of the present invention can be obtained.

The hydrogenation reaction can be carried out at a hydrogen pressure of approximately 0.1 to 20 MPa, preferably 0.5 to 15 MPa, and more preferably 0.5 to 5 MPa and a reaction temperature of approximately 20 to 250°C, preferably 50 to 180°C, and more preferably 70 to 180°C, for a reaction time of usually approximately 0.1 to 100 hours, and preferably 1 to 50 hours.

Examples of the hydrogenation catalyst include Raney nickel; a heterogeneous catalyst in which a metal such as Pt, Pd, Ru, Rh, and Ni is supported on a simple substance such as carbon, alumina, and diatomaceous earth; a Ziegler type catalyst formed of a combination of a transition metal compound with an alkylaluminum compound, an alkyllithium compound, or the like; and a metallocene-based catalyst.

The hydrogenated product obtained as above may be acquired by pouring the polymerization reaction solution into methanol or the like to precipitate the hydrogenated product, followed by heating or drying under reduced pressure, or by pouring the polymerization reaction solution into hot water together with steam to perform so-called steam stripping which is removal of the solvent through azeotropy, followed by heating or drying under reduced pressure.

In the present embodiment, the hydrogenation rate of carbon-carbon double bonds in the entire polymer block (B) is usually within a range of 50 to 99.9% by mole. The hydrogenation rate of carbon-carbon double bonds in the polymer block (B) in the hydrogenated block copolymer (I) can be specified according to the performance desired in various applications of the resin composition.

For example, when it is desired to improve the heat resistance and the weather resistance of a molded body obtained by using the resin composition, the hydrogenation rate of carbon-carbon double bonds in the entire polymer block (B) in the hydrogenated block copolymer (I) is preferably 80% by mole or more, more preferably 85% by mole or more, further preferably 90% by mole or more. In the same case, the upper limit of the hydrogenation rate is not particularly limited, and may be 99% by mole or less, or 98% by mole or less.

The hydrogenation rate can be obtained by performing $^{1}$H-NMR measurement, after hydrogenation, on the content of carbon-carbon double bonds in the conjugated diene compound-derived structural units in the polymer block (B) (including the content of carbon-carbon double bonds in alicyclic skeleton (X)-derived structural units when the alicyclic skeleton (X) is included). More specifically, the hydrogenation rate can be measured according to the method described in Examples.

(Bonding Mode of Polymer Block (A) and Polymer Block (B))

As long as the polymer block (A) and the polymer block (B) are bonded in the hydrogenated block copolymer (I), a bonding mode thereof is not particularly limited, and may be any bonding mode of a linear, branched, or radial bonding mode, or a bonding mode with a combination of two or more thereof. Above all, the bonding mode of the polymer block (A) and the polymer block (B) is preferably linear, and examples thereof include a diblock copolymer represented by A-B in which the polymer block (A) is represented by A and the polymer block (B) is represented by B, a triblock copolymer represented by A-B-A or B-A-B, a tetrablock copolymer represented by A-B-A-B, and a pentablock copolymer represented by A-B-A-B-A or B-A-B-A-B, and an $(A-B)_nZ$-type copolymer (in which Z represents a coupling agent residue and n represents an integer of 3 or more). Among those, the linear triblock copolymer or diblock copolymer is preferred, and the triblock copolymer in the form of A-B-A is preferably used from the viewpoint of flexibility, easiness in production, and the like.

Here, in the present specification, in a case where the same kind of the polymer blocks are bonded linearly via a bifunctional coupling agent or the like, all the bonding polymer blocks are handled as one polymer block. Accordingly, a polymer block which includes the above-mentioned exemplifications and should be strictly expressed as Y-Z-Y (in which Z represents a coupling residue) in nature is represented by Y as a whole, except for a case where it is necessary to be distinguished from the single polymer block Y. In the present specification, such a kind of the polymer block which

includes a coupling agent residue is handled as above, and therefore, for example, a block copolymer which includes a coupling agent residue and should be strictly expressed as A-B-Z-B-A (in which Z represents a coupling agent residue) is expressed as A-B-A and is handled as one example of a triblock copolymer.

<Contents of polymer blocks (A) and (B)>

The hydrogenated block copolymer (I) may contain a polymer block constituted by other monomers, besides the polymer blocks (A) and (B) as long as the objects and effects of the present invention are not impaired, but the total content of the polymer block (A) and the polymer block (B) is preferably 90% by mass or more, more preferably 95% by mass or more, particularly preferably substantially 100% by mass. When the total content is 90% by mass or more, the resin composition is likely to be more excellent in kink resistance, and thus can be suitably used for various purposes.

<Weight average molecular weight of hydrogenated block copolymer (I)>

The weight average molecular weight (Mw) of the hydrogenated block copolymer (I) is preferably 250,000 or less. When the weight average molecular weight of the hydrogenated block copolymer (I) is 250,000 or less, the fluidity of the resin composition is increased, and the kink resistance and moldability are likely to be more excellent.

Further, the weight average molecular weight of the hydrogenated block copolymer (I) is preferably 15,000 or more. When the weight average molecular weight of the hydrogenated block copolymer (I) is 15,000 or more, the productivity or the molding stability of the hydrogenated block copolymer is excellent.

The weight average molecular weight of the hydrogenated block copolymer (I) is preferably 15,000 to 250,000, more preferably 50,000 to 250,000, further preferably 60,000 to 200,000, still more preferably 70,000 to 180,000, still more preferably 130,000 to 170,000.

<Melt flow rate of hydrogenated block copolymer (I)>

The melt flow rate (MFR) of the hydrogenated block copolymer (I) under conditions of 230°C and a load of 2.16 kg is preferably 0.1 g/10 min or more. When the MFR of the hydrogenated block copolymer (I) is 0.1 or more, appropriate fluidity is imparted to the resin composition, and the kink resistance and moldability are likely to be more excellent. Further, the MFR of the hydrogenated block copolymer (I) is preferably 250 or less. When the MFR of the hydrogenated block copolymer (I) is 250 or less, the productivity or molding stability of the hydrogenated block copolymer is excellent.

The MFR of the hydrogenated block copolymer (I) is preferably 0.1 to 250 g/10 min, more preferably 1 to 60 g/10 min, further preferably 3 to 50 g/10 min, still more preferably 5 to 40 g/10 min, particularly preferably 10 to 30 g/10 min.

<Peak top temperature and intensity of tanδ of hydrogenated block copolymer (I)>

tanδ (loss tangent) is a ratio of loss modulus/storage modulus at a frequency of 1 Hz in dynamic viscoelasticity measurement. The peak top temperature and intensity of tanδ greatly contribute to stress relaxation or kink resistance, and other physical properties. Here, the peak top intensity of tanδ refers to a value of tanδ when the peak of tanδ is maximized. Further, the peak top temperature of tanδ refers to a temperature at which the peak of tanδ is maximized.

The peak top temperature and intensity of tanδ of the hydrogenated block copolymer (I) can be measured in accordance with JIS K 7244-10 (2005), and more specifically, is measured in accordance with the method described in Examples.

As the hydrogenated block copolymer (I), according to the measurement, those having a peak top intensity of tanδ of 1.0 or more can be used. It may be even higher, and may be 1.5 or more, or even 1.9 or more. The upper limit of the peak top intensity of tanδ is not particularly limited, and can be, for example, 3.0. The higher peak top intensity of tanδ indicates that physical properties such as vibration damping are excellent at that temperature. If the peak top intensity of tanδ is 1.0 or more, sufficient physical properties can be obtained under the actual use environment.

Further, the peak top temperature of tanδ of the hydrogenated block copolymer (I) is preferably -50°C or more, more preferably -40 °C or more, further preferably -30 °C or more, still more preferably -25 °C or more, and may be 0 °C or more. Further, the upper limit of the peak top temperature of tanδ only has to fall within a range where the effects of the present invention are not impaired, and may be 50 °C or less, 40 °C or less, or 35 °C or less. The range of the peak top temperature of tanδ is preferably, for example, -50 to 50°C, more preferably -40 to 40°C, further preferably -30 to 30°C, still more preferably -25 to 25°C. When the peak top temperature of tanδ is -50°C or more, sufficient physical properties can be obtained under the actual use environment.

«Polypropylene-based resin (II)»

Examples of the polypropylene-based resin (II) include a homopolypropylene, a propylene-ethylene random copolymer, a propylene-ethylene block copolymer, a propylene-butene random copolymer, a propylene-ethylene-butene random copolymer, a propylene-pentene random copolymer, a propylene-hexene random copolymer, a propylene-octene random copolymer, a propylene-ethylene-pentene random copolymer, and a propylene-ethylene-hexene random copolymer.

Further, a modified polypropylene-based resin prepared by graft copolymerization of such a polypropylene-based resin with a modifying agent such as an unsaturated monocarboxylic acid such as acrylic acid, methacrylic acid, and crotonic acid; an unsaturated dicarboxylic acid such as maleic acid, citraconic acid, and itaconic acid; an ester, an amide, or an imide of the unsaturated monocarboxylic acid or the unsaturated dicarboxylic acid; and an unsaturated dicarboxylic anhydride such as maleic anhydride, citraconic anhydride, and itaconic anhydride can also be used.

The melt flow rate of the polypropylene-based resin (II) can be appropriately selected within a range where kink resistance, moldability and the like are improved. Above all, the melt flow rate (MFR) of the polypropylene-based resin (II) under conditions of 230°C, and a load of 2.16 kg is preferably 0.1 to 500 g/10 min. When the MFR of the polypropylene-based resin (II) falls within the range, the compatibility with the hydrogenated block copolymer (I) is good, and appropriate fluidity is imparted to the resin composition, so that the kink resistance and moldability are likely to be more excellent. The MFR of the polypropylene-based resin (II) is more preferably 1 to 50 g/10 min, more preferably 3 to 30 g/10 min.

<<Content ratio>>

The content ratio [(I)/(II)] of the hydrogenated block copolymer (I) to the polypropylene-based resin (II) in the resin composition is preferably 90/10 to 40/60 in mass ratio. When the content ratio [(I)/(II)] falls within the range, the peak top intensity of tan$\delta$ in the resin composition is increased, and the kink resistance is likely to be more excellent. Further, the flexibility, mechanical strength, moldability, etc. for the resin composition are further improved. The content ratio [(I)/(II)] is more preferably 80/20 to 45/55, further preferably 70/30 to 50/50, still more preferably 70/30 to 55/45. When the content ratio of the hydrogenated block copolymer (I) is increased, the flexibility and kink resistance tend to be further improved.

Further, the ratio of the total content of the hydrogenated block copolymer (I) and the polypropylene-based resin (II), to 100% by mass of the total amount of all components used in the resin composition of the present embodiment, can be 80% by mass or more, and is preferably 90% by mass or more, more preferably 95% by mass or more, and may be 100% by mass.

«Optional components»

In the present embodiment, in addition to the hydrogenated block copolymer (I) and the polypropylene-based resin (II), the resin composition may contain polymers other than the (I) component and the (II) component, and various additives within a range where the effects of the present invention are not impaired.

Examples of the polymers include a styrene-based resin, a polyphenylene ether-based resin, a polycarbonate-based resin, a polyamide-based resin, an isobutylene-isoprene copolymer rubber, a polyurethane-based thermoplastic elastomer, a polyphenylene sulfide-based resin, a polyacetal-based resin, a polyester-based resin, an acryl-based resin, and a polyoxymethylene-based resin. Among these polymers, one type can be used alone or two or more types can be used in combination.

Examples of the additives include an antiblocking agent, a processing aid, a reinforcing agent, a filler, a plasticizer, an open-cell foaming agent, a heat stabilizer, a light stabilizer, a UV absorber, an antioxidant, a lubricant, an antistatic agent, an antibacterial agent, an antifungal agent, a dispersant, a coloring agent, a foaming agent, a foaming aid, a flame retardant, a water repellent, a waterproofing agent, an electric conductivity-imparting agent, a thermal conductivity imparting agent, an electromagnetic wave shielding performance imparting agent, a fluorescent agent, and a crystal nucleating agent. Among these additives, one may be used alone, or two or more types may be used in combination.

In medical applications, especially, a lubricant may be added from the viewpoint of improving resistance against forceps, that is the ability of a tube to immediately return to its original shape so that liquid feeding can be quickly resumed. As for the lubricant, for example, aliphatic amides such as stearamide, oleamide, erucamide, methylenebis stearamide, and ethylenebis stearamide; metal soaps such as lead stearate, zinc stearate, calcium stearate, and magnesium stearate; and esters such as stearic acid monoglyceride, and stearyl stearate can be used.

<<Production method of resin composition>>

The production method of the resin composition is not particularly limited, and a conventionally known method can be used for production. For example, the resin composition can be produced by mixing the (I) component and the (II) component, and if necessary, the optional components by using a mixer such as a Henschel mixer, a V blender, a ribbon blender, a tumbler blender, or a conical blender. Further, after the mixing using the mixer, melt-kneading may be performed at 80 to 250°C by using a kneading machine such as a single-screw extruder, a twin-screw extruder, a kneader, a Banbury mixer, or a roll so as to produce the resin composition.

Further, the resin composition can also be produced by dissolving and mixing individual components [at least the (I) component and the (II) component] in a solvent in which each component is soluble, and removing the solvent.

<<Average of vinyl bond amounts>>

In the present embodiment, the average of vinyl bond amounts in the whole polymer block (B) included in the resin composition (that is, the ratio of the vinyl bond amount in the whole polymer block (B)) is 50% by mole or more. When the average of vinyl bond amounts is less than 50% by mole, the compatibility between the hydrogenated block copolymer (I) and the polypropylene-based resin (II) is reduced, and there is a concern that the moldability of the molded body such as transparency or smoothness is deteriorated. Further, since a tube is likely to be oriented in the MD direction, it becomes difficult to exhibit excellent kink resistance. The average of vinyl bond amounts is preferably 55% by mole or more, more preferably 60% by mole or more. Further, the upper limit value of the average of vinyl bond amounts is not particularly limited, and may be 100% by mole.

Here, the above "average of vinyl bond amounts" is calculated by the following equation.

$$\text{Average of vinyl bond amounts (\% by mole)}=[a\times b\times c]/[a\times b]$$

a: the content of the hydrogenated block copolymer (I) when the total mass of the resin composition is 1
b: the content of the polymer block (B) when the total mass of polymer blocks included in the hydrogenated block copolymer (I) is 1
c: the vinyl bond amount of the polymer block (B) (% by mole)

In the equation, when the resin composition contains two or more types of hydrogenated block copolymers (I), the sum of [a×b×c] for the hydrogenated block copolymers (I) is set as the numerator, and the sum of [a×b] for the hydrogenated block copolymers (I) is set as the denominator.

«D hardness of resin composition»

The resin composition of the present embodiment has a D hardness of less than 50, which is measured by using a type D durometer in accordance with JIS K 6253-3 (2012) on a sheet produced through hot press molding. When the D hardness is 50 or more, the flexibility of a tube made of the resin composition is insufficient, and excellent kink resistance cannot be obtained. The D hardness is preferably 45 or less, more preferably 43 or less, further preferably 41 or less. Further, the lower limit value of the D hardness is not limited as long as it falls within a range applicable to the use of the tube, but it may be 10 or more.

The D hardness can be adjusted by controlling the content of the polymer block (A) in the hydrogenated block copolymer (I), the vinyl bond amount, the melt flow rate value of each of the hydrogenated block copolymer (I) and the polypropylene-based resin (II), and the content ratio [(I)/(II)], etc.

A more detailed method for measuring the D hardness is as described in Examples.

<<tanδ of resin composition>>

In the resin composition of the present embodiment, the peak top intensity of tanδ, which is measured therefor in accordance with JIS K 7244-10 (2005), under conditions of a strain amount of 0.1%, a frequency of 1 Hz, a measurement temperature of -70 to 100 °C, and a temperature rise rate of 3°C/min, is preferably 0.2 or more. When the peak top intensity of tanδ is 0.2 or more, the stress when a tube is bent is alleviated, and thus it is thought that the kink resistance is further improved. In some resin compositions, the peak top intensity of tanδ may be higher, i.e., 0.3 or more.

Further, the peak top temperature of tanδ for the resin composition is preferably -50°C or more, more preferably -40°C or more, further preferably -30°C or more, still more preferably -25°C or more, and may be 0°C or more. Further, the upper limit of the peak top temperature of tanδ only has to fall within a range where the effects of the present invention

are not impaired, and may be 50°C or less, 40°C or less, or 35°C or less.

Further, at a frequency of 1 Hz, at 20°C, the tanδ intensity for the resin composition is preferably 0.01 or more, more preferably 0.05 or more.

«Melt flow rate of resin composition»

The melt flow rate (MFR) of the resin composition under conditions of 230°C and a load of 2.16 kg is preferably 0.1 to 50 g/10 min. When the MFR of the resin composition falls within the range, the kink resistance and moldability are likely to be more excellent. The MFR of the hydrogenated block copolymer (I) is more preferably 1 to 40 g/10 min, more preferably 3 to 30 g/10 min, still more preferably 5 to 30 g/10 min, particularly preferably 6 to 30 g/10 min.

[Molded body and tube]

The resin composition of the present embodiment is suitable for molded bodies useful for various purposes, such as containers, films, and sheets. The resin composition can improve the moldability and kink resistance, and thus, is particularly preferably used for tubes.

<<Production of tube>>

The production method of a tube is not particularly limited. For example, there is a method in which the resin composition of the present embodiment is put into an extruder and melted, and is molded into a tubular shape through a die and then is formed into a tube through water-cooling or air-cooling. As for the extruder to be used, a single-screw or multi-screw extruder can be used. Further, during the production, the resin composition can also be molded into the tube directly from the extruder. During molding of the tube, the shape of the tube can be maintained by blowing air into the tube from the die.

The cross-sectional shape of the tube obtained by this method is not particularly limited, but is generally preferably a circular shape, an elliptical shape or the like. The size of the tube is not particularly limited. For example, the outer diameter of the tube can be 1 to 50 mm, and the thickness of the tube can be 0.3 to 20 mm. The shape of the tube can be adjusted according to conditions such as the die shape, the number of revolutions of the extruder screw, the extrusion temperature, and the amount of air blown into the tube.

Further, when the cooling rate during molding of the tube is slowed down, a tube with a high crystallinity is obtained. Thus, in order to appropriately control the crystallinity of the tube to be obtained, the cooling rate during molding of the tube can be appropriately adjusted.

The tube of the present embodiment may have a single layer, or multiple layers in a range where the effects of the present invention are not impaired. A multi-layer tube can be formed by laminating other polymers through a multilayer extrusion method.

Examples of the polymers to be laminated include: olefin-based polymers such as polypropylene, polyethylene, ethylene propylene copolymer rubber (EPM), and ethylene propylene nonconjugated diene copolymer rubber (EPDM); polyester-based polymers such as polyester elastomer, polyethyleneterephthalate, and polybutyleneterephthalate; polyamide-based resins such as polyamide 6, polyamide 6 ·6, polyamide 6 ·10, polyamide 11, polyamide 12, and polyamide 6 -12; acrylic resins such as polymethyl acrylate or polymethyl methacrylate; polyoxymethylene-based resins such as polyoxymethylene homopolymer, and polyoxymethylene copolymer; styrene-based resins such as styrene homopolymer, acrylonitrile styrene resin, and acrylonitrile butadiene ·styrene resin; polycarbonate resin; styrene-based elastomers such as styrene butadiene copolymer rubber, and styrene isoprene copolymer rubber, and hydrogenated or modified products thereof; natural rubber; synthetic isoprene rubber, liquid polyisoprene rubber, and hydrogenated or modified products thereof; chloroprene rubber; acryl rubber; butyl rubber; acrylonitrile butadiene rubber; epichlorohydrin rubber; silicon rubber; fluororubber; chlorosulfonated polyethylene; urethane rubber; polyurethane-based elastomer; polyamide-based elastomer; polyester-based elastomer; and soft vinyl chloride resin.

These polymers can also be used for any of the innermost layer, the intermediate layer, and the outermost layer depending on the desired performance to be imparted to the multi-layer tube. Further, the multi-layer structure may be a part of the tube, may be intermittently multi-layered, or may be a multi-layer structure made of different types of materials depending on portions.

Further, in a range where the effects of the present invention are not impaired, furthermore, in order to maintain the flexibility through suppression of a thickness increase and to improve the pressure resistance, etc., a pressure-resistant tube (hose) can be formed by winding a braided reinforcing thread or a spiral reinforcement. The braided reinforcing thread is provided inside or between layers in the thickness direction, and vinylon, polyamide, polyester, aramid fiber, carbon fiber, metal wire, etc. can be used. The spiral reinforcement is provided in the outer periphery, and metal, plastic, etc. can be used.

«Tube for liquid transportation or medical purposes»

The tube of the present embodiment can be a tube for liquid transportation or medical purposes. Examples thereof include medical tools used for infusion, blood transfusion, peritoneal dialysis, catheter treatment, etc., such as catheters (an intracorporeal indwelling catheter, a balloon catheter, or the like), tubes for infusion solution bags, tubes for blood bags, artificial blood vessels, blood circuits, syringes, hemodialyzers, blood component separators, and artificial lungs.

All portions of the tube for liquid transportation or medical purposes do not need to be formed from the resin composition of the present embodiment, and at least a portion thereof can be formed from the resin composition. For example, in the catheter, the blood bag or the like, a portion to be contacted with a liquid is formed of the tube of the present embodiment, and a portion not to be contacted with a liquid may be formed from other resins used for medical purposes, such as soft vinyl chloride, and polyurethane.

«MD/TD ratio of Elastic modulus»

In the tube of the present embodiment, the ratio [MD/TD] of the tensile modulus of elasticity (MPa) of the tube in the length direction (MD, that is, a direction perpendicular to a TD direction) to the circumferential direction (TD) is preferably 1.5 or less, more preferably 1.3 or less, and may be 1.0 or less. As the value of the ratio [MD/TD] decreases, the kink resistance tends to be improved. From the viewpoint of tensile strength of the tube, the lower limit value of the ratio [MD/TD] is preferably 0.2 or more, preferably 0.5 or more, further preferably 0.8 or more.

It is possible to lower the ratio [MD/TD] by increasing the fluidity of the resin composition by optimizing the melt flow rate values of the hydrogenated block copolymer (I) and the resin composition, or the weight average molecular weight of each component. Further, the adjustment can be made by controlling the manufacturing conditions of the tube.

The ratio [MD/TD] is a value calculated in accordance with the method described in Examples.

<<Stress after 10 min in stress relaxation test>>

In the stress relaxation test in the length direction on the tube of the present embodiment, the stress after 10 min, at a strain of 30%, is preferably 4 MPa or less, more preferably 3 MPa or less, further preferably 2.5 MPa or less. In a case where the stress after 10 min falls within the range, the stress is easily alleviated when the tube is bent, and kink resistance tends to be improved. The lower limit of the stress after 10 min is not particularly limited, but is preferably 0.1 MPa or more from the viewpoint of shape retention of the tube.

The stress after 10 min can be calculated by using, for example, an Instron 3345 tester (manufactured by Instron), in which the strain of 30% is maintained, and the load after the lapse of 10 min is divided by the cross-sectional area of the tube. More specifically, it is a value measured by the method described in Examples.

<<Orientation function S of tube>>

In the tube of the present embodiment, in a plane (MD/TD plane) composed of the length direction and the circumferential direction of the tube, the orientation function S indicating the degree of orientation in the MD is preferably 1 or less, more preferably 0.1 or less, further preferably 0.015 or less, still more preferably 0.01 or less. When the orientation function S falls within the range, the kink resistance tends to be excellent.

The orientation function S may be measured by, for example, a conventionally known wide-angle X-ray diffraction method (WAXD method). More specifically, the orientation function S is calculated by the method described in Examples.

«Crystal orientation ratio MD/TD, and amorphous orientation ratio MD/TD of tube»

In the tube of the present embodiment, the crystal orientation ratio MD/TD is preferably 1.2 or less, more preferably 1.1 or less, still more preferably 1.0 or less. Further, the amorphous orientation ratio MD/TD is preferably 1.4 or less, more preferably 1.3 or less, still more preferably 1.2 or less, particularly preferably 1.1 or less. When the crystal orientation ratio MD/TD and the amorphous orientation ratio MD/TD fall within the ranges, the kink resistance tends to be excellent. From the viewpoint of tensile strength of the tube, the crystal orientation ratio MD/TD and the amorphous orientation ratio MD/TD are preferably 0.1 or more, further preferably 0.3 or more.

For the crystal orientation ratio MD/TD and the amorphous orientation ratio MD/TD, the degree of orientation in each of the length direction (MD), the circumferential direction (TD), and the thickness direction is obtained by three-dimensional measurement, and then, the ratio of the degree of orientation in MD/TD is calculated. More specifically, measurement is performed by the method described in Examples.

[Example]

Hereinafter, the present invention will be specifically described with reference to Examples and Comparative Examples, but the present invention is not limited to these.
Descriptions will be made on the method of evaluating physical properties of hydrogenated block copolymers obtained in Production Examples to be described below.
(1) the content of polymer block (A), the weight average molecular weight per polymer block (A), and the sum total weight average molecular weights of the polymer blocks (A)
An unhydrogenated block copolymer was dissolved in $CDCl_3$ and was subjected to $^1$H-NMR measurement [equipment: "ADVANCE 400 Nano bay" (manufactured by Bruker), a measurement temperature: 30°C]. Then, the content of the polymer block (A) was calculated from the ratio of styrene-derived peak intensity and conjugated diene compound-derived peak intensity.
For the hydrogenated block copolymer obtained in each production example, the sum total weight average molecular weights of the polymer blocks (A) and the weight average molecular weight for each were obtained as molecular weights in terms of standard polystyrene through gel permeation chromatography (GPC).

(GPC measurement device and measurement conditions)

·Device: GPC device "HLC-8020" (manufactured by TOSOH CORPORATION)
·Separation column: "TSKgel GMHXL", "G4000HXL" and "G5000HXL" manufactured by TOSOH CORPORATION were connected in series.
·Eluent: tetrahydrofuran
·Eluent flow rate: 1.0 mL/min
·Column temperature: 40°C
·Detection method: a differential refractive index (RI) detector

The weight average molecular weight per polymer block (A) and the sum total weight average molecular weights of the polymer blocks (A) were obtained by measuring a sampled liquid each time the polymerization for each polymer block was completed in the production process.

(2) Weight average molecular weight of hydrogenated block copolymer

A weight-average molecular weight (Mw) in terms of polystyrene of the hydrogenated block copolymer was determined by gel permeation chromatography (GPC) measurement under the following conditions.

(GPC Measurement Apparatus and Measurement Conditions)

Apparatus: GPC apparatus "HLC-8020" (manufactured by Tosoh Corporation)
· Separation columns: "TSKgel GMHXL", "G4000HXL", and "G5000HXL", manufactured by Tosoh Corporation, were connected in series.
· Eluent: Tetrahydrofuran
· Eluent flow rate: 0.7 mL/min
· Sample concentration: 5 mg/10 mL
· Column temperature: 40°C
· Detector: Differential refractive index (RI) detector
· Calibration curve: Created using standard polystyrene

(3) Hydrogenation rate in polymer block (B)

Through $^1$H-NMR measurement, the hydrogenation rate (% by mole) in the polymer block (B) was calculated from the ratio of the peak area derived from residual olefin of isoprene and/or butadiene and the peak area derived from ethylene, propylene and/or butylene.

·Apparatus: Nuclear magnetic resonance apparatus "ADVANCE 400 Nano Bay" (manufactured by Bruker Corpo-

ration)
Solvent: $CDCl_3$

(4) Vinyl Bond Amount in Polymer Block (B)

A block copolymer before hydrogenation was dissolved in $CDCl_3$ and subjected to $^1$H-NMR measurement [apparatus: "ADVANCE 400 Nano Bay" (manufactured by Bruker Corporation), measurement temperature: 30°C]. A vinyl bond amount (a total of the contents of the 3,4-bond unit and the 1,2-bond unit) (% by mole) was calculated from the ratio of the peak area corresponding to the 3,4-bond unit and the 1,2-bond unit in the isoprene structural unit and the 1,2-bond unit in the butadiene structural unit, or to the respective bond units in the case of the structure units derived from a mixture of isoprene and butadiene, with respect to a total peak area of the structural units derived from isoprene and/or butadiene.

(5) Content of Alicyclic Skeleton (X) in Polymer Block (B)

600 mg of a block copolymer before hydrogenation and 40 mg of Cr(acac)s were dissolved in 4 ml of $CDCl_3$, and subjected to quantitative $^{13}$C-NMR measurement (pulse program: zgig, Inverse gated 1H decoupling method) [apparatus: "ADVANCE 400 Nano Bay" (manufactured by Bruker Corporation), measurement temperature: 30°C] using a 10-mm NMR tube, and a content (% by mole) of each of the alicyclic skeletons (X) in the polymer block (B) was calculated by the following method.
Note that, in Table 3, (X) represent the following alicyclic skeletons.
X: an alicyclic skeleton having a combination of the following substituents (i) to (vi)

(i): $R^1$ = hydrogen atom, $R^2$ = hydrogen atom, $R^3$ = hydrogen atom; (1,2Bd+Bd)
(ii): $R^1$ = hydrogen atom, $R^2$ = methyl group, $R^3$ = hydrogen atom; (1,2Bd+1,2Ip)
(iii): $R^1$ = hydrogen atom, $R^2$ = hydrogen atom, $R^3$ = methyl group; (1,2Bd+3,4Ip)
(iv): $R^1$ = methyl group, $R^2$ = hydrogen atom, $R^3$ = hydrogen atom; (1,2Ip+Bd)
(v): $R^1$ = methyl group, $R^2$ = methyl group, $R^3$ = hydrogen atom; (1,2Ip+1,2Ip)
(vi): $R^1$ = methyl group, $R^2$ = hydrogen atom, $R^3$ = methyl group; (1,2Ip+3,4Ip)

[Calculation Method]

The structures derived from the respective peaks are shown in Table 1-1. In a case where the integrated values of the respective peaks are taken as a to g, the integrated values of the respective structures are as shown in Table 1-2, and the contents of X, X1, and X2 are (a + g - c)/(a + b + c - d + e/2 + 2f), (g - c)/(a + b + c - d + e/2 + 2f), and a/(a + b + c - d + e/2 + 2f).
In Table 1 (in Table 1-1 and Table 1-2), X1 and X2 represent the following alicyclic skeletons.

X1: an alicyclic skeleton having a combination of the substituents (i) and (iv)
X2: an alicyclic skeleton having a combination of the substituents (ii), (iii), (v), and (iv)

Table 1-1

| Peak (ppm) | Structure | Integrated value |
|---|---|---|
| 108-110 | X2 | a |
| 110-113 | 3,4Ip+1,2Ip+X1 | b |
| 113-116 | 1,2Bd | c |
| 122-127 | 1,4Ip+St | d |
| 127-132 | 1,4Bd×2+St×4 | e |
| 132-137 | 1, 41p | f |
| 142-145 | 1,2Bd+X1 | g |

Table 1-2

| Structure | Integrated value |
|---|---|
| St | d-f |
| 1, 4Ip | f |
| 3,4Ip+ 1, 2Ip | b-(g-c) |
| 1.4Bd | (e-(d-f)×4)/2 |
| 1,2Bd | c |
| X1 | g-c |
| X2 | a |
| Total | a+b+c-d+e/2+2f |

(6) Peak top temperature and peak top intensity of tanδ, and tanδ intensity at 20°C

For the following measurement, the hydrogenated block copolymer in Production Example was pressurized at a temperature of 230°C and a pressure of 10 MPa for 3 min to prepare a single-layer sheet with a thickness of 1.0 mm. The single-layer sheet was cut into a disc shape, and this was set as a test sheet.

In the measurement, on the basis of JIS K 7244-10 (2005), a strain control-type dynamic viscoelasticity device "ARES-G2" (manufactured by TA Instruments Japan) with a disc diameter of 8 mm was used as a parallel flat plate vibrating rheometer.

The gap between two flat plates was completely filled with the test sheet, and then with a strain amount of 0.1%, the test sheet was vibrated at a frequency of 1 Hz, and the temperature was raised from -70°C to 100°C at a constant rate of 3°C /min. The temperature of the test sheet and the discs was maintained until the measurement values of shear loss modulus and shear storage modulus did not change, and then the maximum value of peak intensity of tanδ (peak top intensity) and the temperature at which the corresponding maximum value was obtained (peak top temperature) were obtained. Further, the tanδ intensity at 20°C was obtained.

(7) Melt flow rate (MFR)

The hydrogenated block copolymer in Production Example was measured under conditions of a temperature of 230°C, and a load of 2.16 kg in accordance with JIS K 7210 (2014).

[Production Example 1]

Production of hydrogenated block copolymer (TPE1) 50 kg of cyclohexane as a solvent, and 76 g of a cyclohexane solution of sec-butyllithium having a concentration of 10.5% by mass as an anionic polymerization initiator (substantial addition amount of sec-butyllithium: 8.0 g) were prepared in a nitrogen-purged and dried pressure-resistant container.

After the temperature inside the pressure-resistant container was raised to 50°C, 1.00 kg of styrene (1) was added and polymerized for 1 hour. In the container with an internal temperature of 50°C, 0.33 kg of tetrahydrofuran was added as a Lewis base, a mixed liquid including 8.20 kg of isoprene and 6.44 kg of butadiene was added over 5 h at an average diene feed rate noted in Table 2, followed by polymerization for 2 h, and moreover 1.00 kg of styrene (2) was added, followed by polymerization for 1 h, so that a reaction solution containing a polystyrene-poly(isoprene/butadiene)-polystyrene triblock copolymer was obtained.

A Ziegler-based hydrogenation catalyst formed of nickel octylate and trimethyl aluminum was added to the corresponding reaction solution under a hydrogen atmosphere, followed by a reaction for 5 h under conditions of a hydrogen pressure of 1 MPa, and 80°C. The corresponding reaction solution was cooled and the pressure was released, and then the catalyst was removed through washing with water, and then vacuum-drying was performed. Thereby, a hydrogenate of the polystyrene-poly(isoprene/butadiene)-polystyrene triblock copolymer (hereinafter, also referred to as TPE1) was obtained.

Table 2 illustrates each raw material and its amount in use. Further, Table 3 illustrates the evaluation results of physical properties.

[Production Examples 2 to 8]

Production of hydrogenated block copolymers (TPE2) to (TPE8)

In relation to the hydrogenated block copolymers (TPE2) to (TPE8), individual components and their amounts in use, and reaction conditions for Production Example 1 were changed as noted in Table 2.

Further, for the hydrogenated block copolymer (TPE3), after a conjugated diene compound was put and polymerized, 30.6 g of γ-glycidoxypropyltrimethoxysilane (γ-GPTMS) was added. Then, a coupling reaction was carried out at 60°C for 60 min so as to obtain a reaction solution containing a polystyrene-polybutadiene copolymer.

For the hydrogenated block copolymer (TPE7), a reaction solution containing a polystyrene-polybutadiene copolymer was obtained in the same manner as in (TPE3) except that the feed time of the conjugated diene compound was changed as in Table 2, and the amount of γ-GPTMS was set as 34.0 g.

Except for the above, the hydrogenated block copolymers (TPE2) to (TPE8) were produced in the same manner as in Production Example 1. Further, Table 3 illustrates the evaluation results of the physical properties.

Table 2

| | | | Production Example 1 | Production Example 2 | Production Example 3 | Production Example 4 | Production Example 5 | Production Example 6 | Production Example 7 | Production Example 8 |
|---|---|---|---|---|---|---|---|---|---|---|
| | | | TPE1 | TPE2 | TPE3 | TPE4 | TPE5 | TPE6 | TPE7 | TPE8 |
| Amount in use (kg) | Cyclohexane | | 50 | 50 | 50 | 50 | 50 | 50 | 50 | 50 |
| | sec- Butyllithium (10.5 mass% cyclohexane solution) | | 0.076 | 0.081 | 0.237 | 0.101 | 0.127 | 0.186 | 0.263 | 0.087 |
| | (A) | Styrene (1) | 1.00 | 0.67 | 2.33 | 1.00 | 1.75 | 2.50 | 2.33 | 1.00 |
| | | Styrene (2) | 1.00 | 0.67 | - | 1.00 | 1.75 | 2.50 | - | 1.00 |
| | (B) | Isoprene | 8.20 | 8.57 | - | 8.05 | 13.15 | 6.41 | - | 8.20 |
| | | Butadiene | 6.44 | 6.74 | 14.31 | 6.59 | - | 5.24 | 14.31 | 6.44 |
| | Lewis base | Tetrahydrofuran | 0.33 | 0.33 | 0.33 | - | 0.30 | - | 0.33 | - |
| | | DTHFP | - | - | - | 0.04 | - | - | - | 0.06 |
| Reaction Condition | Diene polymerization temperature (°C) | | 50 | 50 | 50 | 50 | 50 | 50 | 50 | 50 |
| | Diene feed time | | 5 | 5 | 5 | 5 | 5 | 5 | 4 | 5 |
| | Average diene feed rate per mol of active terminal (kg/h) | | 23.5 | 23 | 7.4 | 17.7 | 12.6 | 7.6 | 8.2 | 20.5 |

Table 3

| | | Production Example 1 | Production Example 2 | Production Example 3 | Production Example 4 | Production Example 5 | Production Example 6 | Production Example 7 | Production Example 8 |
|---|---|---|---|---|---|---|---|---|---|
| | | TPE1 | TPE2 | TPE3 | TPE4 | TPE5 | TPE6 | TPE7 | TPE8 |
| | Structural unit of polymer block (A) | St | St | St | St | St | St | St | St |
| | Components constituting polymer block (B) | Ip/Bd | Ip/Bd | Bd | Ip/Bd | Ip | Ip/Bd | Bd | Ip/Bd |
| | Mass ratio of components constituting polymer block (B) | 55/45 | 55/45 | 100 | 55/45 | 100 | 55/45 | 100 | 55/45 |
| | Polymer structure | A/B/A | A/B/A | $(A/B)_3$-Z | A/B/A | A/B/A | A/B/A | $(A/B)_3$-Z | A/B/A |
| (1) | Content (mass%) of polymer block(A) | 12 | 8 | 14 | 12 | 21 | 30 | 14 | 12 |
| | Weight average molecular weight per polymer block (A) | 8,000 | 4,500 | 6,000 | 6,000 | 7,500 | 8,500 | 5,500 | 8, 500 |
| | Sum total of weight average molecular weights of polymer blocks (A) | 16,000 | 9,000 | 18,000 | 12,000 | 15,000 | 17,000 | 16,500 | 17,000 |
| (2) | Weight average molecular weight of hydrogenated block copolymer | 158,000 | 166,000 | 181,000 | 140,000 | 101,000 | 93,000 | 160,000 | 171,000 |
| (3) | Hydrogenation rate (mol%) in polymer block (B) | 95 | 92 | 99 | 97 | 90 | 99 | 99 | 95 |
| (4) | Vinyl bond amount (mol%) in polymer block (B) | 60 | 60 | 75 | 78 | 60 | 6 | 75 | 75 |
| (5) | Content (mol%) of (X) in polymer block (B) | 1.9 | 1.9 | 10.4 | 10 | 0 | 0 | 10.1 | 14.9 |
| (6) | Peak top temperature(°C) of tanδ | -20 | -20 | -33 | 6.1 | -4.5 | -50 | -33 | 14.9 |
| | Peak top intensity of tanδ | 2.2 | 2.05 | 2.08 | 2.07 | 2.2 | 0.39 | 2.08 | 2.24 |
| | Tan δ intensity at 20°C | 0.06 | 0.07 | 0.06 | 0.8 | 0.35 | 0.05 | 0.06 | 1.7 |

(continued)

| | | Production Example 1 | Production Example 2 | Production Example 3 | Production Example 4 | Production Example 5 | Production Example 6 | Production Example 7 | Production Example 8 |
|---|---|---|---|---|---|---|---|---|---|
| | | TPE1 | TPE2 | TPE3 | TPE4 | TPE5 | TPE6 | TPE7 | TPE8 |
| (7) | MFR (g/10min, 230 °C) | 2 | 17 | 3 | 11 | 4 | <0.1 | 13 | 2 |

[Examples 1 to 10] and [Comparative examples 1 to 5]

By using a twin-screw extruder ("ZSK26Mc" manufactured by Coperion), each component was fed and melt-kneaded according to combinations noted in Tables 4 and 5 under conditions including a cylinder temperature of 200°C, and 300 rpm (the number of revolutions of the screw) so as to obtain a resin composition.
The obtained resin composition was measured and evaluated according to the following evaluation method of physical properties. The results are noted in Tables 4 and 5.

Further, each of used components is as follows.

(I): hydrogenated block copolymer

Hydrogenated block copolymers (TPE1) to (TPE8) produced in the production examples.

(II): polypropylene-based resin

PP1

·Product name "Prime Polypro (registered trademark) F327"
·Manufactured by Prime Polymer Co., Ltd
·Propylene-ethylene-butene random copolymer
•MFR: 7 g/10 min (230°C, 2.16 kg)
Melting point: 139°C
·Propylene content: 95% by mole

«Evaluation method of physical properties»

(1) Physical properties of resin composition

(1-1) Average of vinyl bond amounts

For resin compositions obtained in Examples and Comparative Examples, the average of vinyl bond amounts of the polymer block (B) was calculated by the following equation.
When the resin composition contained two or more types of hydrogenated block copolymers, the sum of [a×b×c] for the hydrogenated block copolymers (I) was set as the numerator, and the sum of [a×b] for the hydrogenated block copolymers (I) was set as the denominator.

$$\text{Average of vinyl bond amounts (\% by mole)}=[a\times b\times c]/[a\times b]$$

a: the content of the hydrogenated block copolymer when the total mass of the resin composition was 1.
b: the content of the polymer block (B) when the total mass of polymer blocks included in the hydrogenated block copolymer was 1.
c: the vinyl bond amount of the polymer block (B) (% by mole).

Specifically, for example, application of Example 6 to the equation was as follows.

$$[(0.5\times0.92\times60)+(0.1\times0.7\times6)]/[(0.5\times0.92)+(0.1\times0.7)]=53 \text{ (rounded off after the decimal point)}$$

(1-2) Hardness (Type D)

Sheet-shaped test pieces with a thickness of 1 mm, which were produced by hot-press molding the resin compositions obtained in Examples and Comparative Examples at 230°C and 10 MPa for 3 min, were measured by

using a type D durometer in accordance with JIS K 6253-3 (2012).

(1-3) Peak top temperature and peak top intensity of tanδ, and tanδ intensity at 20°C

For the resin compositions obtained in Examples and Comparative Examples, the peak top temperature and peak top intensity of tanδ, and the tanδ intensity at 20°C were measured in the same manner as in the above-described measurement method of the hydrogenated block copolymer.

(1-4) Melt flow rate (MFR)

For the resin compositions obtained in Examples and Comparative Examples, the MFR was measured in the same manner as in the above-described measurement method of the hydrogenated block copolymer.

(2) Evaluation of tube

By using the resin compositions obtained in Examples and Comparative Examples, with a single-screw extruder equipped with a tube die (an outer diameter: 7.9 mm, an inner diameter: 5.7 mm, a lip width: 2.2 mm), molding was performed under each of conditions of (a) a winding speed (production speed) of 20 m/min and an extrusion temperature of 175°C, and (b) a winding speed (production speed) of 60 m/min and an extrusion temperature of 175°C and water-cooling was performed in a cooling bath. Whereby a tube with an outer diameter of 4 mm, an inner diameter of 3 mm, and a thickness of 0.5 mm was formed.

For each of the tubes obtained under the conditions (a) and (b), the following evaluations were performed.

(2-1) MD/TD ratio of elastic modulus

After the tube was cut into a sheet shape, the tensile modulus of elasticity (MPa) was measured in accordance with JIS K 7161 (2014) in each of the MD direction and the TD direction, and then the ratio MD/TD of the tensile modulus of elasticity in the MD direction to the TD direction was calculated.

(2-2) Stress after 10 min in stress relaxation test

In the stress relaxation test, an Instron 3345 tester (manufactured by Instron) was used. At room temperature (23°C), the tube was clamped between grippers with an inter-gripper distance of 20 mm, and was pulled at a rate of 500 mm/min until the strain reached 30%. Then, the strain was maintained for 10 min. The stress after 10 min was calculated by maintaining the strain of 30%, and dividing the load after the lapse of 10 min by the cross-sectional area of the tube.

(2-3) Orientation function S of tube

For the wide-angle X-ray diffraction (WAXD) analysis, the following device and conditions were used.

Device: D8 Discover IμS manufactured by Bruker Japan (detector: two-dimensional PSPC VANTEC-500, X-ray source: CuKα)
Condition: output of 1 mA ·50 kV, collimator diameter of 0.3 mm,
Exposure time per measurement: 10 min, camera distance: 10 cm.

In the measurement result (a two-dimensional image) of a MD/TD plane of the tube that was cut into a sheet shape, intensities in a range of a diffraction angle 2θ of 13 to 15° were averaged, and the value was set as I(φ). Then, from the azimuth angle φ dependence, the orientation function S was calculated by the following equation.

$$S = \frac{1}{2}(3 < cos^2\theta > -1)$$

$$< cos^2\theta > = \frac{\int_{180}^{360} I(\varphi)\sin(\varphi)\,cos^2(\varphi)d\varphi}{\int_{180}^{360} I(\varphi)\sin(\varphi)\,d\varphi}$$

(2-4) Amorphous orientation ratio MD/TD and crystal orientation ratio MD/TD of tube

When measurement was performed under the same conditions as in the above WAXD analysis, a two-dimensional image was created for each measurement result in each of directions Through, Edge, and End. A 2θ plot was created for each result at every 10° azimuth angle, and was divided into amorphousness-derived diffraction intensity (Ia) and crystal-derived diffraction intensity (Ic) through fitting by an error least squares method.

When Ia was plotted with respect to the azimuth angle φ, the data in each direction was multiplied by a correction factor so that intensities of intensities indicating the same direction (for example, 90°of Through and 90°of End indicating TD) are all matched. From the corrected data, the degrees of orientation in three directions of the MD, the TD, and the thickness direction were obtained, and among them, the ratio of the MD direction value to the TD direction value was taken and was set as an amorphous orientation ratio MD/TD.

The same calculation was also performed for Ic to obtain a crystal orientation ratio MD/TD.

(2-5) Kink resistance

Jigs provided with grooves (width 12 mm, depth 6 mm) were attached to the upper gripper and the lower gripper of an Instron 3345 tester (manufactured by Instron). The initial distance between jigs was set as 60 mm. The tube a was cut into a length of 300 mm and fitted into the grooves to form a U shape in a space between the jigs as illustrated in 1-1 of FIG. 1. By moving the jig in the compression direction P at a speed of 240 mm/min, the curvature of the tube was gradually increased, resulting in a kink. As illustrated in 1-2 of FIG. 1, a point at which the tube was bent and the load began to drop was defined as a kink point, and the displacement Q (mm) to the kink point was measured. The larger the displacement Q to the kink point, the better the kink resistance.

(2-6) Moldability

The outer surface of the tube was visually observed, and was evaluated on the basis of the following evaluation criteria.

A: the tube surface is smooth and transparent.
B: the tube surface is smooth and slightly cloudy.
C: the tube surface is rough, cloudy.

Table 4

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| (I) | TPE1 | part by mass | 60 | | | | | | | | | |
| | TPE2 | part by mass | | 50 | 60 | | 40 | 50 | | | | 30 |
| | TPE3 | part by mass | | | | 60 | | | | | | |
| | TPE4 | part by mass | | | | | | | | 60 | | |
| | TPE5 | part by mass | | | | | 20 | | | | 60 | |
| | TPE6 | part by mass | | | | | | 10 | | | | |
| | TPE7 | part by mass | | | | | | | 60 | | | |
| | TPE8 | part by mass | | | | | | | | | | 30 |
| (II) | PP1 | part by mass | 40 | 50 | 40 | 40 | 40 | 40 | 40 | 40 | 40 | 40 |
| (1) Physical properties | Average of vinyl bond amounts (mol%) | | 60 | 60 | 60 | 75 | 60 | 53 | 75 | 78 | 60 | 68 |
| | Hardness (Type D) | | 36 | 41 | 36 | 34 | 36 | 38 | 34 | 42 | 39 | 40 |
| | Peak top temperature(°C) of tanS | | -19 | -16 | -18 | -28 | -9.5 | -16 | -26 | 4.5 | -3.3 | 4.6 |
| | Peak top intensity of tanS | | 0.35 | 0.28 | 0.36 | 0.31 | 0.36 | 0.28 | 0.31 | 0.42 | 0.416 | 0.46 |
| | Tan δ intensity at 20 °C | | 0.077 | 0.080 | 0.087 | 0.077 | 0.130 | 0.080 | 0.080 | 0.242 | 0.192 | 0.260 |
| | MFR (g/10 min, 230 °C) | | 3.4 | 15 | 16 | 5.9 | 10 | 9.1 | 12 | 9.9 | 4.5 | 7.9 |

(continued)

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| (2) Evaluation | (a) Production speed 20m/min | | | | | | | | | | | |
| | MD/TD ratio of elastic modulus | (-) | 0.91 | 1.09 | 0.85 | 1.11 | 1.15 | 1.11 | 0.87 | 0.83 | 1.25 | 0.98 |
| | In stress relaxation, stress after 10 min | (-) | 1.89 | 2.41 | 2.05 | 2.26 | 2.18 | 2.40 | 2.08 | 2.14 | 2.05 | 2.10 |
| | Orientation function S | (-) | 0.0100 | 0.0101 | 0.0046 | 0.0094 | 0.0100 | 0.0118 | 0.0071 | 0.0044 | 0.0121 | 0.0066 |
| | Amorphous orientation ratio MD/TD | (-) | 1.00 | 1.00 | 0.98 | 1.00 | 1.00 | 1.02 | 1.00 | 0.99 | 1.02 | 1.00 |
| | Crystal orientation ratio MD/TD | (-) | 1.03 | 1.03 | 0.96 | 1.04 | 1.02 | 1.06 | 1.02 | 0.96 | 1.04 | 1.00 |
| | Kink resistance | (mm) | 29 | 30 | 32 | 30 | 29 | 28 | 30 | 32 | 27 | 32 |
| | Moldability | | A | A | A | B | A | B | A | A | A | A |
| | (b) Production speed 60m/min | | | | | | | | | | | |
| | MD/TD ratio of elastic modulus | (-) | 1.01 | 1.02 | 0.87 | 1.20 | 1.19 | 1.23 | 1.00 | 0.90 | 1.12 | 1.02 |
| | In stress relaxation, stress after 10 min | (-) | 1.87 | 2.26 | 1.91 | 1.90 | 1.95 | 2.29 | 1.99 | 1.93 | 1.94 | 1.97 |
| | Orientation function S | (-) | 0.0141 | 0.0164 | 0.0055 | 0.0152 | 0.01 | 0.02 | 0.0132 | 0.01 | 0.02 | 0.0096 |
| | Amorphous orientation ratio MD/TD | (-) | 1.01 | 1.00 | 1.00 | 1.00 | 1.02 | 1.03 | 1.00 | 1.00 | 1.02 | 1.01 |
| | Crystal orientation ratio MD/TD | (-) | 1.08 | 1.09 | 0.98 | 1.08 | 1.08 | 1.10 | 1.06 | 1.00 | 1.07 | 1.06 |
| | Kink resistance | (mm) | 25 | 26 | 32 | 27 | 25 | 23 | 28 | 31 | 25 | 31 |
| | Moldability | | A | A | A | B | B | B | A | A | B | A |

Table 5

| | | | Comparative Example | | | | |
|---|---|---|---|---|---|---|---|
| | | | 1 | 2 | 3 | 4 | 5 |
| (I) | TPE1 | part by mass | 30 | | | | |
| | TPE2 | part by mass | | | | | 40 |
| | TPE3 | part by mass | | 30 | | | |
| | TPE4 | part by mass | | | 30 | | |
| | TPE5 | part by mass | | | | | |
| | TPE6 | part by mass | | | | 60 | 20 |
| | TPE7 | part by mass | | | | | |
| | TPE8 | part by mass | | | | | |
| (II) | PP1 | part by mass | 70 | 70 | 70 | 40 | 40 |
| (1) Physical properties | Average of vinyl bond amounts (mol%) | | 60 | 75 | 78 | 6 | 45 |
| | Hardness (Type D) | | 51 | 50 | 56 | 42 | 39 |
| | Peak top temperature(°C) of tanS | | -5.5 | -28 | 3.8 | -50 | -15.9 |
| | Peak top intensity of tanS | | 0.12 | 0.11 | 0.19 | 0.07 | 0.25 |
| | Tan δ intensity at 20 °C | | 0.071 | 0.050 | 0.122 | 0.040 | 0.083 |
| | MFR (g/10min, 230 °C) | | 5.6 | 7.4 | 9 | 0.72 | 6.9 |
| (2) Evaluation | (a) production speed 20m/min | | | | | | |
| | MD/TD ratio of elastic modulus | (-) | 1.74 | 1.77 | 1.41 | 1.82 | 1.38 |
| | In stress relaxation, stress after 10 min | (-) | 5.77 | 5.55 | 5.08 | 3.67 | 3.05 |
| | Orientation function S | (-) | 0.0201 | 0.0193 | 0.0188 | 0.0244 | 0.0112 |
| | Amorphous orientation ratio MD/TD | (-) | 1.01 | 1.00 | 0.99 | 1.09 | 1.03 |
| | Crystal orientation ratio MD/TD | (-) | 1.21 | 1.19 | 1.19 | 1.17 | 1.08 |
| | Kink resistance | (mm) | 17 | 18 | 19 | 12 | 25 |
| | Moldability | | B | B | B | C | B |

(continued)

| | | | Comparative Example | | | | |
|---|---|---|---|---|---|---|---|
| | | | 1 | 2 | 3 | 4 | 5 |
| | (b) production speed 60m/min | | | | | | |
| | MD/TD ratio of elastic modulus | (-) | 1.81 | 1.85 | 1.63 | 2.00 | 1.56 |
| | In stress relaxation, stress after 10 min | (-) | 5.70 | 5.51 | 5.01 | 3.49 | 3.00 |
| | Orientation function S | (-) | 0.0281 | 0.0277 | 0.0278 | 0.0295 | 0.0150 |
| | Amorphous orientation ratio MD/TD | (-) | 1.01 | 1.01 | 1.00 | 1.10 | 1.05 |
| | Crystal orientation ratio MD/TD | (-) | 1.23 | 1.22 | 1.25 | 1.29 | 1.17 |
| | Kink resistance | (mm) | 15 | 15 | 15 | 13 | 20 |
| | Moldability | | B | B | B | C | C |

In the production of the tube, as the winding speed (production speed) increases, in general, the orientation in the MD direction increases. Thus, it becomes difficult to obtain good kink resistance. Further, the increase of the production speed tends to cause a deterioration of moldability, such as occurrence of surface roughness or reduction of transparency. However, from Table 4, it can be seen that tubes obtained in Examples were excellent in kink resistance and moldability under both the conditions (a) and (b). Further, from Examples 5, 6 and 10, it can be seen that even when a plurality of types of hydrogenated block copolymers were blended, both the kink resistance and the moldability were excellent.

Meanwhile, in Comparative Examples 1 to 3 with a D hardness of 50 or more, an excellent kink resistance was not obtained. Further, in Comparative Examples 4 and 5 with an average vinyl bond amount of less than 50% by mole, an excellent kink resistance was not obtained, too, and furthermore, the moldability evaluation of Comparative Example 4 was C, and the moldability evaluation of Comparative Example 5 was C under the condition (b).

From the above examples and comparative examples, it can be seen that when both the requirements of an average vinyl bond amount and a D hardness are satisfied, the effects of excellence in moldability and kink resistance of the resin composition are obtained.

Industrial Applicability

The resin composition of the present embodiment can be used for molded bodies useful for various purposes, such as containers, films and sheets. In particular, the resin composition of the present embodiment can improve the moldability and kink resistance, and thus is preferably used for a tube, and is particularly useful as a tube for liquid transportation or medical purposes.

## Claims

**1.** A resin composition comprising a hydrogenated block copolymer (I) and a polypropylene-based resin (II),

wherein the hydrogenated block copolymer (I) includes a polymer block (A) and a polymer block (B), and the polymer block (B) includes a structural unit derived from a conjugated diene compound,
an average of vinyl bond amounts in the whole polymer block (B) included in the resin composition is 50% by mole or more, and
a D hardness is less than 50 as measured by using a type D durometer in accordance with JIS K 6253-3 (2012) on a sheet produced from the resin composition through hot-press molding.

**2.** The resin composition according to claim 1, wherein at least one type of the hydrogenated block copolymers (I) is a hydrogenated block copolymer (I-1) whose polymer block (B) has a structural unit with a main chain comprising one or more types of alicyclic skeletons (X) represented by a formula (X) below, a content of the alicyclic skeletons

(X) being 1% by mole or more in the polymer block (B).

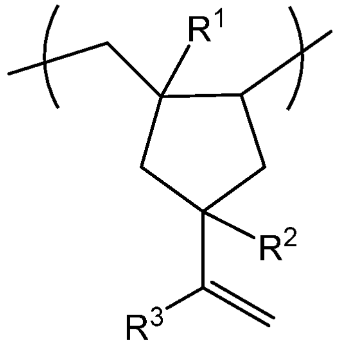

(X)

wherein, each of $R^1$ to $R^3$ independently represents a hydrogen atom or a hydrocarbon group having 1 to 11 carbon atoms, and a plurality of $R^1$ to $R^3$ may be the same or different from each other.

**3.** The resin composition according to claim 2, wherein all the hydrogenated block copolymers (I) in the resin composition are the hydrogenated block copolymers (I-1).

**4.** The resin composition according to any one of claims 1 to 3, wherein a melt flow rate of the hydrogenated block copolymer (I), under conditions of 230°C and a load of 2.16 kg, is 0.1 g/10 min or more.

**5.** The resin composition according to any one of claims 1 to 4, wherein a vinyl bond amount in the polymer block (B) included in the respective hydrogenated block copolymers (I) in the resin composition is 50 to 100% by mole.

**6.** The resin composition according to any one of claims 1 to 5, wherein a hydrogenation rate of carbon-carbon double bonds in the entire polymer block (B) in the hydrogenated block copolymer (I) is 50 to 99.9% by mole.

**7.** The resin composition according to any one of claims 1 to 6, wherein a peak top intensity of tan$\delta$ is 0.2 or more as measured for the resin composition in accordance with JIS K 7244-10 (2005) under conditions of a strain amount of 0.1%, a frequency of 1 Hz, a measurement temperature of -70 to 100°C, and a temperature rise rate of 3°C/min.

**8.** The resin composition according to any one of claims 1 to 7, wherein the polymer block (A) in the hydrogenated block copolymer (I) contains a structural unit derived from an aromatic vinyl compound.

**9.** The resin composition according to any one of claims 1 to 8, wherein a content of the polymer block (A) in the hydrogenated block copolymer (I) is 25% by mass or less.

**10.** The resin composition according to any one of claims 1 to 9, wherein the polymer block (B) in the hydrogenated block copolymer (I) contains a structural unit derived from at least one type selected from isoprene and butadiene.

**11.** The resin composition according to any one of claims 1 to 10, wherein a weight average molecular weight of the hydrogenated block copolymer (I) is 250,000 or less.

**12.** The resin composition according to any one of claims 1 to 11, wherein a content ratio [(I)/(II)] of the hydrogenated block copolymer (I) to the polypropylene-based resin (II) is 90/10 to 40/60 in mass ratio.

**13.** A molded body obtained by using the resin composition according to any one of claims 1 to 12.

**14.** A tube obtained by using the resin composition according to any one of claims 1 to 12.

**15.** The tube according to claim 14, which is for liquid transportation or medical purposes.

**16.** The tube according to claim 14 or 15, wherein a ratio [MD/TD] of a tensile modulus of elasticity (MPa) of the tube in a length direction (MD) to that of a circumferential direction (TD) is 1.5 or less.

**17.** The tube according to any one of claims 14 to 16, wherein in a stress relaxation measurement in a length direction, a stress after 10 min, at a strain of 30%, is 0.1 MPa or more and 2.5 MPa or less.

**18.** The tube according to any one of claims 14 to 17, wherein in a two-dimensional image obtained from wide-angle X-ray measurement on a plane composed of a length direction (MD) and a circumferential direction (TD) of the tube, when an average value of intensities in a range of a diffraction angle 2θ of 13 to 15 ° is set as I(φ), an orientation function S in a MD direction, which is calculated by an equation below from the azimuth φ dependence, is 0.015 or less.

$$S = \frac{1}{2}(3 < cos^2\theta > -1)$$

$$< cos^2\theta > = \frac{\int_{180}^{360} I(\varphi)\sin(\varphi)\, cos^2(\varphi) d\varphi}{\int_{180}^{360} I(\varphi)\sin(\varphi)\, d\varphi}$$

[Fig. 1]

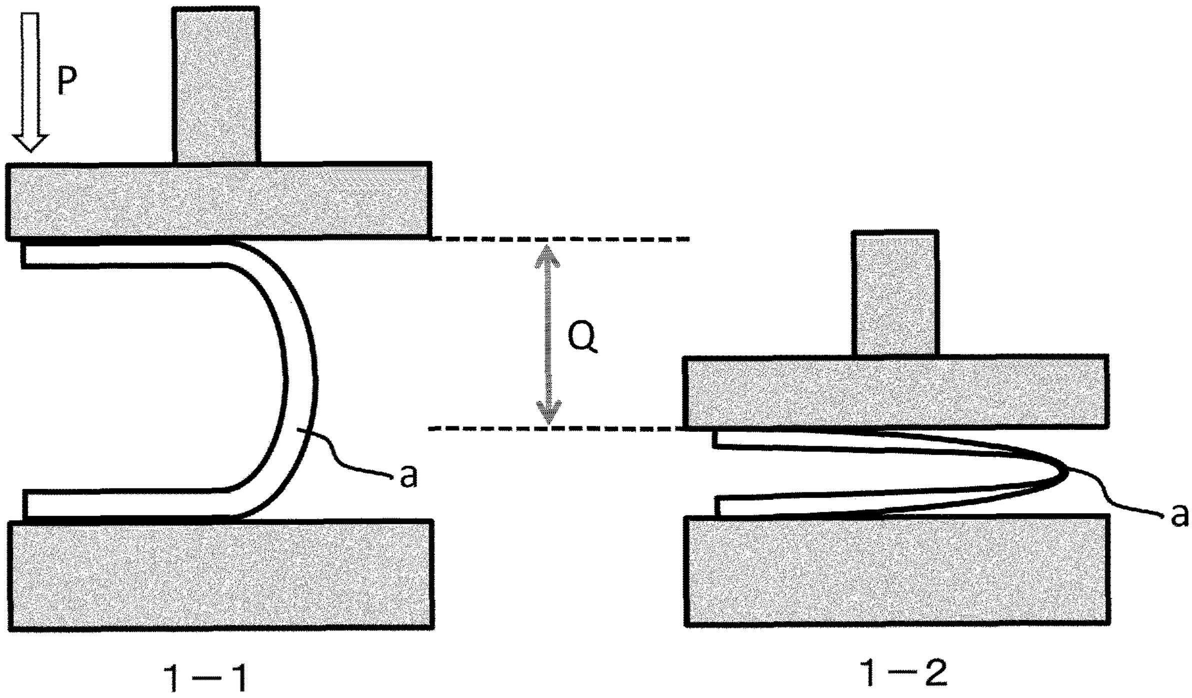

# INTERNATIONAL SEARCH REPORT

International application No.
**PCT/JP2021/039663**

**A. CLASSIFICATION OF SUBJECT MATTER**

***B65D 65/00***(2006.01)i; ***C08F 297/04***(2006.01)i; ***C08L 23/10***(2006.01)i; ***C08L 53/00***(2006.01)i; ***C08J 5/00***(2006.01)i; ***F16L 11/06***(2006.01)i
FI: C08L53/00; C08L23/10; C08F297/04; B65D65/00 A; F16L11/06; C08J5/00 CEQ

According to International Patent Classification (IPC) or to both national classification and IPC

**B. FIELDS SEARCHED**

Minimum documentation searched (classification system followed by classification symbols)

B65D65/00; C08F297/04; C08L23/10; C08L53/00; C08J5/00; F16L11/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-213481 A (JSR CORP.) 11 August 2005 (2005-08-11) claims, examples | 1-18 |
| X | JP 2017-196749 A (ASAHI KASEI CORP.) 02 November 2017 (2017-11-02) claims, paragraph [0030], examples | 1-18 |
| X | WO 2016/136760 A1 (KURARAY CO., LTD.) 01 September 2016 (2016-09-01) claims, examples | 1-18 |
| X | JP 2018-95878 A (MCPP INNOVATION LLC.) 21 June 2018 (2018-06-21) claims, examples | 1-18 |
| X | JP 2002-248671 A (KURARAY CO., LTD.) 03 September 2002 (2002-09-03) claims, examples | 1-18 |
| A | JP 2015-232095 A (MITSUBISHI CHEMICALS CORP.) 24 December 2015 (2015-12-24) table 1 | 1-18 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/039663**

**C. DOCUMENTS CONSIDERED TO BE RELEVANT**

| Category* | Citation of document, with indication, where appropriate, of the relevant passages | Relevant to claim No. |
|---|---|---|
| A | JP 2012-52025 A (HITACHI CHEM. CO., LTD.) 15 March 2012 (2012-03-15) table 1 | 1-18 |
| A | JP 2016-8260 A (MITSUBISHI CHEMICALS CORP.) 18 January 2016 (2016-01-18) table 1 | 1-18 |
| A | JP 2003-227079 A (HIRAOKA & CO., LTD.) 15 August 2003 (2003-08-15) example 3 | 1-18 |

Form PCT/ISA/210 (second sheet) (January 2015)

**INTERNATIONAL SEARCH REPORT**
**Information on patent family members**

International application No.
**PCT/JP2021/039663**

| Patent document cited in search report | Publication date (day/month/year) | Patent family member(s) | Publication date (day/month/year) |
|---|---|---|---|
| JP 2005-213481 A | 11 August 2005 | (Family: none) | |
| JP 2017-196749 A | 02 November 2017 | (Family: none) | |
| WO 2016/136760 A1 | 01 September 2016 | US 2018/0030195 A1<br>claims, examples<br>EP 3263613 A1<br>CA 2977454 A1<br>CN 107250188 A<br>KR 10-2017-0121181 A<br>TW 201638131 A<br>JP 2017-057419 A | |
| JP 2018-95878 A | 21 June 2018 | US 2019/0309157 A1<br>claims, examples<br>WO 2018/110590 A1<br>EP 3556806 A1<br>CN 110072939 A<br>KR 10-2019-0091456 A | |
| JP 2002-248671 A | 03 September 2002 | US 2002/0104544 A1<br>claims, examples<br>EP 1210953 A1 | |
| JP 2015-232095 A | 24 December 2015 | (Family: none) | |
| JP 2012-52025 A | 15 March 2012 | (Family: none) | |
| JP 2016-8260 A | 18 January 2016 | (Family: none) | |
| JP 2003-227079 A | 15 August 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002284830 A
- WO 2000015680 A1
- JP 2006117879 A
- JP 2010053319 A
- WO 2010104068 A1
- WO 2016002764 A1
- US 3966691 A